# FASCICULE DE BREVET EUROPEEN

(11) **EP 3 775 650 B1**
(45) Date de publication et mention de la délivrance du brevet: **24.08.2022**
(21) Numéro de dépôt: 19719566.2
(22) Date de dépôt: 01.04.2019
(51) Int. Cl.: F16L 3/22, F01N 13/18

(54) **DISPOSITIF DE MAINTIEN SECURISE ET DE PROTECTION THERMIQUE D'ELEMENTS**
VORRICHTUNG ZUM HALTEN UND THERMISCHEN SCHÜTZEN VON ELEMENTEN
DEVICE FOR KEEPING ELEMENTS SECURED AND THERMALLY PROTECTED

(30) Priorité: 09.04.2018 FR 1853086
(43) Date de publication de la demande: 17.02.2021
(73) Titulaire: PSA Automobiles SA, 78300 Poissy (FR)
(72) Inventeur: CONVERS, Germain, 70290 Champagney (FR)
(86) Numéro de dépôt international: PCT/FR2019/050754
(87) Numéro de publication internationale: WO 2019/197748

(56) Documents cités:
- BE-A- 767 894
- US-A- 5 271 588
- US-A1- 2014 103 171
- US-A1- 2017 122 460

## Description

L'invention concerne un dispositif de maintien sécurisé et de protection thermique d'éléments longitudinaux, filaires souples et/ou tubulaires semi-rigides et sensibles à la chaleur, fixés sous le plancher de véhicules automobiles à proximité du conduit d'échappement.

Plus particulièrement, l'invention s'intéresse à un dispositif de maintien sécurisé et de protection thermique d'un faisceau de câbles électriques et de tuyaux de fluide passant sous le plancher des véhicules automobiles et localement entre la « planche à talon » et la « manivelle » du conduit d'échappement.

### ÉTAT DE LA TECHNIQUE ANTÉRIEURE

L'invention concerne le domaine de la protection thermique des éléments fonctionnels s'étendant longitudinalement, tels que les faisceaux de câbles électriques et les tuyaux de carburant, qui cheminent sous le plancher des véhicules automobiles, à proximité des composants du groupe motopropulseur dégageant de la chaleur et, notamment, du conduit d'échappement des gaz.

Le plancher est formé d'une partie avant et d'une partie arrière reliées entre elles dans une zone située entre une traverse dénommée « planche à talon » et une traverse arrière de soutien des sièges. Le conduit d'échappement, qui est raccordé à l'avant au groupe motopropulseur, est fixé sous le véhicule et s'étend de la partie avant à la partie arrière du plancher.

Ce conduit forme localement un coude dénommé communément « manivelle » situé immédiatement après la planche à talon et qui permet d'optimiser le volume du réservoir de carburant.

Dans cet environnement très compact, les éléments fonctionnels longitudinaux sont déviés et franchissent alors le conduit d'échappement dans un couloir étroit, à distance de la manivelle, pour venir se raccorder au réservoir. 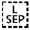 La protection thermique de ces éléments longitudinaux vis-à-vis du conduit d'échappement est assurée par un bouclier thermique, généralement métallique, associé à des moyens de fixation au plancher. 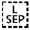

De nombreuses solutions ont déjà permis d'améliorer la protection thermique de ces élément longitudinaux, telle que celle décrite, par exemple, dans le document FR2896299 qui propose un écran de protection thermique pourvu d'ailettes pour améliorer la rapidité de la fixation d'un conduit.

Le EP1671847 propose, quant à lui, un écran métallique associé à un surmoulage en plastique alvéolé fixé sur le moteur.

Le document EP2758676 présente une tôle de protection acoustique ou thermique percée de deux orifices au travers desquels sont fixés des parties saillantes d'un élément de fixation.

Toutes ces solutions présentent des systèmes de maintien de conduits à écrans de protection fixés sur un composant du groupe motopropulseur, sur le plancher ou le châssis du véhicule.

Cependant, bien que certains éléments longitudinaux coopérant avec le groupe motopropulseur s'étendent nécessairement à proximité immédiate du circuit des gaz d'échappement, il n'existe pas de possibilité de fixation sur ce circuit. Ainsi, aucune des solutions de fixation connues ne peut convenir pour la fixation de ces éléments.

En outre, certains véhicules sont équipés d'un système de chauffage additionnel destiné à réchauffer le compartiment moteur lorsque ce dernier n'est pas tournant. Ce système de chauffage nécessite l'adjonction d'éléments longitudinaux supplémentaires et notamment, d'un tuyau d'alimentation en carburant raccordé au réservoir et d'un faisceau de câbles électriques.

Or, le couloir occupé sous le plancher par les élément principaux (tuyaux et câbles) est étroit et déjà très encombré de sorte qu'il n'est donc pas possible d'y loger les éléments longitudinaux du système de chauffage additionnel.

Dans ce contexte et afin d'éviter la création d'interfaces spécifiques, il est prévu de ne pas modifier le parcours des éléments longitudinaux principaux et de faire passer les éléments longitudinaux additionnels le long de la manivelle du conduit d'échappement pour rejoindre ensuite le réservoir.

Toutefois, autour de la manivelle du conduit d'échappement, les éléments longitudinaux additionnels sont exposés à des températures très élevées, de l'ordre de 400°C ce qui présente des risques sérieux d'incendie.

En outre, le tuyau d'alimentation en carburant étant semi-rigide et le faisceau de câbles souple, il est difficile de maîtriser leur position dans cette zone et d'éviter qu'ils viennent en contact avec le conduit d'échappement au cours du temps.

Par ailleurs, les écrans de protection thermique connus ne peuvent être utilisés dans la zone de manivelle du conduit d'échappement car en cas de passage du véhicule dans un gué, la vague générée par les roues avant sous le plancher est projetée vers l'arrière et viendrait frapper cet écran qui serait alors déformé sous l'impact de manière préjudiciable.

On connait le document US2017122460A1 correspondant au préambule de la revendication 1 illustrant un dispositif utilisable pour le maintien et de protection thermique d'éléments longitudinaux filaires souples sous le plancher de véhicules automobiles à proximité du conduit d'échappement. De tels dispositifs sont également connus des documents US5271588A1, US2014103171A1, BE767894A.

### EXPOSÉ DE L'INVENTION

La présente invention a pour but de résoudre les problèmes techniques posés par l'art antérieur en proposant un dispositif visant à assurer la protection thermique et le maintien sécurisé des éléments longitudinaux additionnels dans la zone coudée dite de « manivelle » du conduit d'échappement.

Ce but est atteint, selon l'invention, au moyen d'un dispositif de maintien et de protection thermique d'éléments longitudinaux filaires souples et/ou tubulaires semi-rigides sous le plancher de véhicules automobiles à proximité du conduit d'échappement, comprenant une embase de support coopérant avec des organes de fixation au plancher et se prolongeant vers le haut par une lame de calage en équerre délimitant avec ladite embase un logement thermiquement isolé pour les éléments longitudinaux, ladite embase et/ou ladite lame portant des organes de retenue desdits éléments, caractérisé en ce que ladite embase porte, sur sa face tournée vers le plancher, un plot formant entretoise au travers duquel est ménagé un alésage débouchant, sur son autre face, dans un écrou soudé coopérant avec les organes de fixation au plancher.

Selon une caractéristique avantageuse, l'embase de support comporte un plateau surélevé portant les organes de retenue des éléments longitudinaux.

Avantageusement, les organes de retenue des éléments longitudinaux sont choisis parmi les agrafes, les lanières ou les clips.

De préférence, la lame de calage en équerre est inclinée par rapport à l'embase selon un angle compris entre 90° et 120°.

Selon une autre caractéristique, la hauteur de la lame est comprise entre 50 et 100 mm.

Selon une autre variante, la lame est pourvue sur sa face extérieure en regard du conduit d'échappement d'un garnissage thermiquement isolant.

Selon des modes de réalisation avantageux, l'embase et la lame sont réalisées en tôle ou en matière plastique et d'une seule pièce.

Un autre objet de l'invention est un procédé de montage du dispositif tel que défini ci-dessus sous un plancher de véhicule automobile, caractérisé en ce qu'on fixe ladite embase de support sur un longeron de renfort du plancher de telle sorte que ladite lame de calage s'étende entre la planche à talon du plancher et la manivelle du conduit d'échappement en étant séparée de ce dernier d'une distance d'au moins 20mm.

Selon une caractéristique de ce procédé, on bride les éléments longitudinaux sur ladite embase dans un plan décalé vers le haut par rapport à la face inférieure des longerons de renfort du plancher.

Encore un autre objet de l'invention est un véhicule automobile équipé du dispositif présentant les caractéristiques définies ci-dessus.

L'invention permet d'équiper des véhicules de fonctions additionnelles telles que des moyens de chauffage du compartiment moteur sans modifier le montage et la position des circuits d'alimentation en carburant et des faisceaux de câbles électriques existants.

Le dispositif de l'invention offre une solution simple et fiable pour la fixation et la protection thermique des éléments longitudinaux additionnels rapportés sans nuire à la compacité de l'ensemble des équipements fonctionnels montés sous le plancher des véhicules.

En outre, lors du passage en gué du véhicule, l'intégrité du dispositif de l'invention, qui est logé dans un espace confiné, reste préservée.

Grâce aux organes de retenue et aux organes de bridage prévus, respectivement sur l'embase et la lame du dispositif, les risques de contact des éléments longitudinaux avec le conduit d'échappement sont écartés, même en présence de vibrations importantes.

Du fait que le taux de monte d'un équipement additionnel (tel que les moyens de chauffage complémentaires) et très faible, le dispositif et le procédé de l'invention permettent de s'affranchir d'interfaces spécifiques longeant la manivelle du conduit d'échappement et d'éviter un surcoût pour les véhicules qui n'en sont pas équipé.

### BRÈVE DESCRIPTION DES FIGURES

D'autres caractéristiques et avantages de l'invention ressortiront à la lecture de la description qui va suivre, en référence aux figures annexées et détaillées ci-après.
La figure 1 représentent une vue en perspective d'un mode de réalisation du dispositif de maintien et de protection thermique de l'invention avec des tronçons d'éléments longitudinaux rapportés.
La figure 2 représente une vue schématique et partielle du dessous d'un plancher de véhicule automobile sur lequel est monté le dispositif de l'invention.
La figure 3 est une vue schématique en coupe du dispositif de l'invention dans sa zone d'implantation sous le plancher d'un véhicule automobile, à proximité du conduit d'échappement.

Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus et décrits ci-après ne sont donnés qu'à titre d'exemples non limitatif. Il est explicitement prévu que l'on puisse combiner entre eux ces différents modes pour en proposer d'autres.

La présente invention a pour objet un dispositif de maintien sécurisé et de protection thermique d'un ensemble d'éléments longitudinaux, filaires souples et/ou tubulaires semi-rigides et sensibles à la chaleur, sous le plancher d'un véhicule automobile à proximité d'une source de chaleur et, en particulier, du conduit des gaz d'échappement d'un groupe motopropulseur.

Ces éléments longitudinaux sont constitués, notamment, d'un tuyau A d'alimentation en carburant et/ou d'un faisceau F de câbles électriques qui sont rapportés et destinés à être agencés sous le plancher à titre additionnel en complément, par exemple, d'un réseau principal de tubulures et de câbles.

Dans l'environnement du plancher et compte tenu de la compacité des équipements déjà présents à titre principal qui font le tour du conduit d'échappement pour alimenter le réservoir de carburant, les espaces disponibles pour l'agencement de ces éléments longitudinaux additionnels sont peu nombreux et étroits.

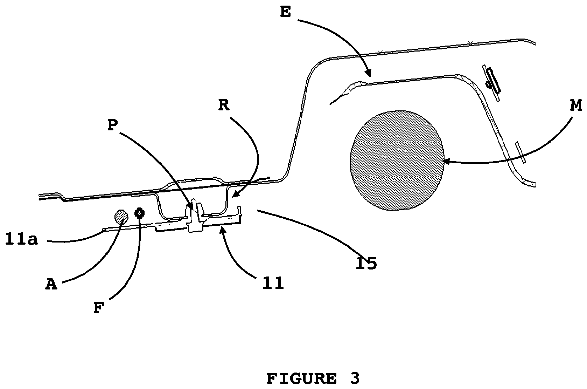

L'invention prévoit donc une nouvelle architecture permettant de faire passer ces éléments longitudinaux dans une zone située entre une traverse dénommée « planche à talon » T (visible en coupe sur la figure 3) et une traverse arrière de soutien des sièges (non représentée). Le conduit d'échappement C, qui est raccordé à l'avant au groupe motopropulseur, s'étend de la partie avant à la partie arrière du plancher et forme localement un coude dénommé communément « manivelle » M situé immédiatement après la planche à talon T et qui permet d'optimiser le volume du réservoir de carburant, comme illustré par la figure 3. Le conduit d'échappement est isolé sur une partie de sa périphérie par un écran de protection thermique E, comme illustré par la figure 3.

Le plancher comprend généralement plusieurs cavités délimitées par le plancher inférieur et le plancher supérieur dans lesquelles est logé, au moins partiellement, le conduit d'échappement C. Le plancher est rigidement fixé à des longerons longitudinaux R de renfort du véhicule et également à la planche à talon T.

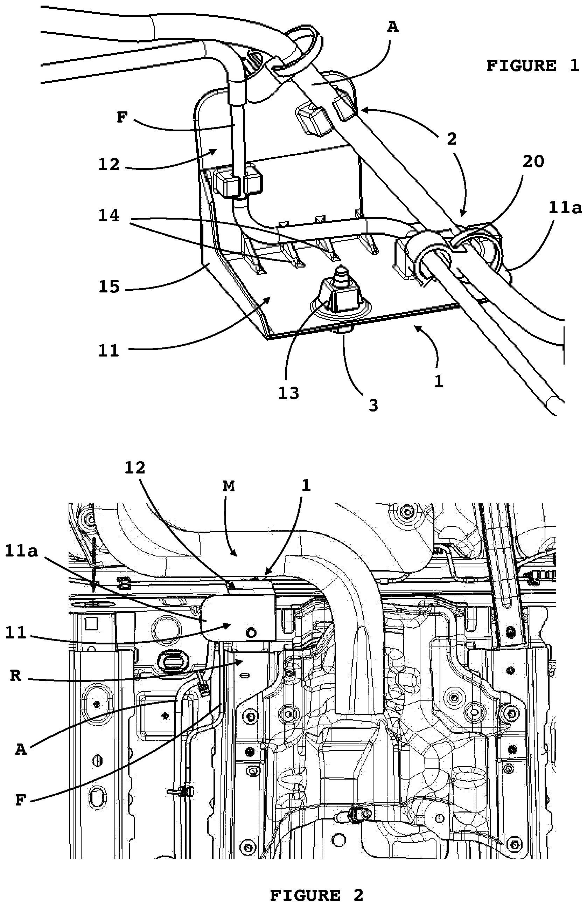

Dans le mode de réalisation illustré par la figure 1, le dispositif 1 de maintien et de protection thermique de l'invention comprend, d'une part, une embase 11 de support des éléments longitudinaux A, F coopérant avec des organes P de fixation au plancher (représentés schématiquement sur la figure 3).

Le dispositif comprend, d'autre part, une lame 12 en équerre prolongeant l'embase 11 vers le haut et assurant le calage des éléments longitudinaux A, F. La lame 12 délimite, avec l'embase 11, un logement thermiquement isolé pour les éléments longitudinaux A, F.

Le dispositif de l'invention comprend, en outre, des nervures 14 et une paroi latérale 15 de rigidification qui s'étendent entre l'embase 11 et la lame 12.

L'embase 11 et/ou la lame 12 portent des organes 2 de retenue des éléments longitudinaux. L'embase 11 de support comporte un plateau 11a portant les organes 2 de retenue des éléments longitudinaux, comme illustré par la figure 1. Ce plateau 11a déborde ici latéralement de la ligne de jonction avec la lame 12. Dans la variante de réalisation de la figure 3, le plateau 11a est aussi décalé et surélevé par rapport au plan de l'embase 11.

Sur sa face destinée à être tournée vers le plancher après montage du dispositif 1, l'embase 11 porte un plot 13 formant entretoise au travers duquel est ménagé un alésage débouchant, sur son autre face, dans un écrou soudé 3 coopérant avec les organes P de fixation au plancher.

Les organes 2 de retenue des éléments longitudinaux peuvent être choisis parmi les agrafes, les lanières ou, comme illustré par la figure 1, être réalisés sous forme de clips 20 autobloquants.

De préférence, la lame 12 de calage en équerre est inclinée par rapport à l'embase 11 selon un angle compris entre 90° et 120° et sa hauteur est comprise entre 50 et 100 mm. Dans le mode de réalisation de la figure 1, la lame 12 présente une ligne d'inflexion transversale délimitant deux portions d'inclinaisons ou de courbures différentes ; de façon à suivre le profil cylindrique du conduit d'échappement.

L'embase 11 et la lame 12 sont réalisées, de préférence, en tôle d'acier et d'une seule pièce et, afin de renforcer l'isolation thermique de l'espace intercalaire dans lequel sont logés les éléments longitudinaux A, F, la lame 12 est pourvue, sur sa face en regard du conduit d'échappement M, d'un garnissage thermiquement isolant.

Le procédé de montage du dispositif de l'invention consiste à solidariser l'embase 11 de support sur le longeron R de renfort du plancher situé à proximité de la manivelle M du conduit d'échappement au moyen d'organes de fixation traditionnels (vis ou clips). Le montage est effectué de telle sorte que la lame 12 de calage s'étende entre la planche à talon T et la manivelle M du conduit d'échappement en étant séparée de ce dernier d'une distance d'au moins 20mm.

En effet, la température dans la zone de la manivelle M est d'environ 150°C à une distance de 20mm du conduit d'échappement. Des gaines de protection thermiques supportant des températures de 200°C sont disponibles et sont prévues sur les éléments longitudinaux A, F (tuyaux de carburant et faisceau de câbles).

Les éléments longitudinaux sont retenus et immobilisés sur le plateau 11a de l'embase 11 dans un plan qui se trouve décalé vers le haut par rapport à la face inférieure des longerons R de renfort du plancher délimitant la garde au sol, comme illustré par la figure 3. Cette configuration de montage permet d'éviter leur l'arrachement ou la détérioration des éléments longitudinaux en cas de contact du plancher avec le sol, de choc ou de passage de gué du véhicule.

## Revendications

1. Dispositif (1) de maintien et de protection thermique d'éléments longitudinaux filaires souples (F) et/ou tubulaires semi-rigides (A) sous le plancher de véhicules automobiles à proximité du conduit d'échappement, comprenant une embase (11) de support coopérant avec des organes (P) de fixation au plancher et se prolongeant vers le haut par une lame (12) de calage en équerre délimitant avec ladite embase (11) un logement thermiquement isolé pour les éléments longitudinaux (A, F), ladite embase et/ou ladite lame portant des organes (2) de retenue desdits éléments, **caractérisé en ce que** ladite embase (11) porte, sur sa face tournée vers le plancher, un plot (13) formant entretoise au travers duquel est ménagé un alésage débouchant, sur son autre face, dans un écrou soudé (3) coopérant avec les organes (P) de fixation au plancher.

2. Dispositif selon la revendication 1, **caractérisé en ce que** ladite embase (11) de support comporte un plateau (11a) surélevé portant les organes (2) de retenue des éléments longitudinaux (A, F).

3. Dispositif selon l'une des revendications précédentes, **caractérisé en ce que** lesdits organes (2) de retenue des éléments longitudinaux (A, F) sont choisis parmi les agrafes, les lanières, les clips (20).

4. Dispositif selon l'une des revendications précédentes, **caractérisé en ce que** ladite lame (12) de calage en équerre est inclinée par rapport à l'embase (11) selon un angle compris entre 90° et 120°.

5. Dispositif selon l'une des revendications précédentes, **caractérisé en ce que** la hauteur de ladite lame (12) est comprise entre 50 et 100 mm.

6. Dispositif selon l'une des revendications précédentes, **caractérisé en ce que** ladite lame (12) est pourvue sur sa face en regard du conduit d'échappement d'un garnissage thermiquement isolant.

7. Dispositif selon l'une des revendications précédentes, **caractérisé en ce que** ladite embase (11) et ladite lame (12) sont réalisées en tôle et d'une seule pièce.

8. Procédé de montage du dispositif (1) selon l'une des revendications précédentes, sous un plancher de véhicule automobile, **caractérisé en ce qu'**on fixe ladite embase (11) de support sur un longeron (R) de renfort du plancher de telle sorte que ladite lame (12) de calage s'étende entre la planche à talon (T) et la manivelle (M) du conduit d'échappement en étant séparée de ce dernier d'une distance d'au moins 20 mm.

9. Procédé de montage selon la revendication précédente, **caractérisé en ce qu'**on retient les éléments longitudinaux (A, F) sur ladite embase (11) dans un plan décalé vers le haut par rapport à la face inférieure desdits longerons (R) de renfort du plancher.

## Patentansprüche

1. Vorrichtung (1) zum Halten und thermischen Schutz von Längselementen aus flexiblem Draht (F) und/oder halbstarren Rohren (A) unter dem Boden von Kraftfahrzeugen in der Nähe des Abgaskanals, umfassend eine Basis (11) einer Stütze, die mit Elementen zusammenwirkt (P) zur Befestigung am Boden und sich nach oben erstreckend durch eine abgewinkelte Keilklinge (12), die mit der Basis (11) ein wärmeisoliertes Gehäuse für die Längselemente (A, F) begrenzt, wobei die Basis und/oder die Klingentragelemente (2) zum Halten der Elemente, **dadurch gekennzeichnet, dass** die Basis (11) auf ihrer dem Boden zugewandten Seite einen Bolzen (13) trägt, der einen Abstandshalter bildet, durch den eine Bohrung gebildet ist, die auf ihrer anderen Seite in eine geschweißte Mutter (3) Zusammenwirken mit den Elementen (P) zum Befestigen am Boden .

2. Vorrichtung nach Anspruch 1, **dadurch gekennzeichnet, dass** die Stützbasis (11) eine erhöhte Platte (11a) umfasst, die die Elemente (2) zum Halten der Längselemente (A, F) trägt.

3. Vorrichtung nach einem der vorangehenden Ansprüche, **dadurch gekennzeichnet, dass** die Organe (2) zum Halten der Längselemente (A, F) ausgewählt sind aus den Heftklammern, Riemen, Klammern (20).

4. Vorrichtung nach einem der vorangehenden Ansprüche, **dadurch gekennzeichnet, dass** die quadratische Keilklinge (12) in Bezug auf die Basis (11) in einem Winkel zwischen 90° und 120° geneigt ist.

5. Vorrichtung nach einem der vorhergehenden Ansprüche, **dadurch gekennzeichnet, dass** die Höhe der Klinge (12) zwischen 50 und 100 mm liegt.

6. Vorrichtung nach einem der vorangehenden Ansprüche, **dadurch gekennzeichnet, dass** die Lamelle (12) auf ihrer dem Abgaskanal zugewandten Seite mit einer thermisch isolierenden Verkleidung versehen ist.

7. Vorrichtung nach einem der vorhergehenden Ansprüche, **dadurch gekennzeichnet, dass** die Basis (11) und die Klinge (12) aus Blech und einstückig sind.

8. Verfahren zum Montieren der Vorrichtung (1) nach einem der vorhergehenden Ansprüche unter dem Boden eines Kraftfahrzeugs, **dadurch gekennzeichnet, dass** die Stützbasis (11) auf diese Weise an einem Verstärkungsträger (R) des Bodens befestigt wird dass sich das Keilblatt (12) zwischen dem Fersenbrett (T) und der Kröpfung (M) des Abgaskanals erstreckt und von letzterem um einen Abstand von mindestens 20 mm getrennt ist.

9. Verfahren zum Montieren nach dem vorhergehenden Anspruch, **dadurch gekennzeichnet, dass** die Längselemente (A, F) auf der Basis (11) in einer Ebene gehalten werden, die in Bezug auf die Unterseite der Längselemente (R) zur Verstärkung nach oben versetzt ist Boden.

## Claims

1. Device (1) for holding and thermal protection of flexible wire (F) and/or semirigid tubular (A) longitudinal elements under the floor of motor vehicles close to the exhaust duct, comprising a base (11) of support cooperating with members (P) for fixing to the floor and extending upwards by an angled wedging blade (12) delimiting with said base (11) a thermally insulated housing for the longitudinal elements (A, F), said base and/or said blade carrying members (2) for retaining said elements, **characterized in that** said base (11) carries, on its face facing the floor, a stud (13) forming a spacer through which a bore is formed emerging, on its other face, in a welded nut (3) cooperating with the members (P) for fixing to the floor.

2. Device according to claim 1, **characterized in that** the said support base (11) comprises a raised plate (11a) carrying the members (2) for retaining the longitudinal elements (A, F).

3. Device according to one of the preceding claims, **characterized in that** the said members (2) for retaining the longitudinal elements (A, F) are chosen from among the staples, straps, clips (20).

4. Device according to one of the preceding claims, **characterized in that** the said square wedging blade (12) is inclined relative to the base (11) at an angle of between 90° and 120°.

5. Device according to one of the preceding claims, **characterized in that** the height of the said blade (12) is between 50 and 100 mm.

6. Device according to one of the preceding claims, **characterized in that** the said blade (12) is provided on its face facing the exhaust duct with a thermally insulating lining.

7. Device according to one of the preceding claims, **characterized in that** the said base (11) and the said blade (12) are made of sheet metal and in one piece.

8. Method of mounting the device (1) according to one of the preceding claims, under the floor of a motor vehicle, **characterized in that** the said support base (11) is fixed to a reinforcing beam (R) of the floor in such a way that said wedging blade (12) extends between the heel board (T) and the crank (M) of the exhaust duct while being separated from the latter by a distance of at least 20 mm.

9. Method of mounting according to the preceding claim, **characterized in that** the longitudinal elements (A, F) are retained on the said base (11) in a plane offset upwards with respect to the lower face of the said longitudinal members (R) for reinforcing the floor.
